# EUROPEAN PATENT SPECIFICATION

(11) **EP 2 589 783 B1**
(45) Date of publication and mention of the grant of the patent: **22.04.2015**
(21) Application number: 12189759.9
(22) Date of filing: 24.10.2012
(51) Int. Cl.: F02M 35/02, F02M 35/04, F02B 33/44

(54) **Air Filter Unit for Motor Vehicle**
Luftfiltereinheit für Kraftfahrzeuge
Unité de filtre à air pour véhicule à moteur

(30) Priority: 02.11.2011 GB 201118918
(43) Date of publication of application: 08.05.2013
(73) Proprietor: Nissan Motor Manufacturing (UK) Ltd., Cranfield Bedfordshire MK43 0DB (GB)
(72) Inventor: Garcia Sanchez, Israel, 08040 Barcelona (ES); Takada, Daisuke, 08040 Barcelona (ES)

(56) References cited:
- WO-A1-00/77384
- DE-A1- 19 803 230
- JP-A- 10 318 056
- JP-U- 59 103 825
- JP-U- 60 041 531

## Description

The present invention relates to an air filter unit for a motor vehicle, particularly a compact vehicle with an intercooler system where there is limited free space in an engine bay.

In the design of a compact vehicle, it is commonplace to locate an air cleaner/filter unit on top of the engine where there is more space available than in other areas in the engine bay. However, even in this location space is limited, particularly because ducting to an intercooler is often routed over the top of the engine from a turbocharger to which the air filter unit is connected.

It is known that the effectiveness of an air filter unit is related to its depth. Therefore, any attempt to reduce the depth of an air filter unit to meet space constraints can result in an increase in engine air intake noise if the housing is made smaller; and to more frequent maintenance being required if the filter element is made smaller. Constriction of the air intake passage below its optimum size can also reduce the engine's efficiency, resulting in a lower power output; and also an increase in fuel consumption, and therefore in CO₂ emissions.

Document JP 59-103825U discloses an air filter upstream of a turbocharger and an air conduit from the turbocharger to the intake manifold. The air conduit is arrangend adjacent to the housing containing the air filter element.

Document JP 60-04153U discloses an air intake module and discrete chambers housing an air filter upstream of a turbocharger and an air conduit downstream thereof.

The present invention seeks to provide an air filter unit that will allow for improved performance within the space constraints of existing engine designs.

In a broad aspect the invention provides an air filter unit for a motor vehicle, the air filter unit comprising a housing for mounting on an engine of the motor vehicle, said housing including an air inlet and an air outlet, and being capable of accommodating an air filtering means between the air inlet and the air outlet, wherein the housing further accommodates a through-path for a conduit associated with another component of the engine; characterized in that the housing (11) encloses the conduit (IC1) above and below, so that air flow can freely pass around the through-path (12) before exiting the housing (11) via the air outlet (14).

In the context of the invention "conduit" refers to any fluid carrying component, pipe, duct or the like. Furthermore, the word "housing" is considered to be equivalent in the context of the air filter unit to "casing".

Preferably the through-path is located downstream of air filtering means in the direction of flow of air passing through the air filter unit.

Preferably the conduit associated with the through-path is an air pipe or duct; more preferably carrying air from a turbocharger to an intercooler. Preferably the conduit in the through-path is integrated into the housing of the air filter unit. Such integration may be by means of seals made of rubber or other suitable material, which take up tolerances or fill any gaps between the conduit and the housing, so that the housing is leak free at the joints between the housing and the conduit.

Advantageously, where the conduit is integrated with the housing, this reduces the number of components and simplifies assembly.

In a preferred embodiment of the invention, the through-path/conduit is located to cross the housing generally perpendicularly to the direction of flow of air between the air inlet and the air outlet.

It is intended to select a cassette/cartridge type air filtering element to enable ease of serviceability. In an embodiment, the air filtering side of the housing is separated from the conduit accommodating side of the housing to avoid welding and sealing broken parts that may result from the hot temperatures of the turbocharger air carried by the conduit. The air filtering side of the housing may be defined as a space between the air inlet and the air filtering element, which is bounded by a base and walls of the housing, and by the air filtering element. In another embodiment, at least the part of the conduit in the through-path may be double-skinned, for improved thermal insulation compared to a single-skinned conduit.

In another broad aspect of the invention there is provided an air filter unit for a motor vehicle engine according to any preceding paragraph, wherein the air filter unit defines, in use, a first air flow path between the air inlet and the air outlet, and wherein the conduit defines a second flow path, said second flow path not being in fluid communication with the first air flow path.

According to one embodiment, suitable ducting (or another component such as a silencer) is connected at each end of the integrated conduit to form a connection between a turbocharger and an intercooler of the engine.

Furthermore, according to the invention, there is provided a method of installing an air filter unit on a motor vehicle engine, wherein the air filter unit includes a housing with an air inlet and an air outlet, and is capable of accommodating an air filtering means between the air inlet and the air outlet, the method comprising connecting air flow lines to a conduit means passing through the housing, said conduit means being sealed from communication with air passing through the air filtering means; characterized in that the housing encloses the conduit means above and below, so that air flow can freely pass around the conduit means before exiting the housing via the air outlet.

According to all aspects of the invention, the air filter unit of the invention integrates therethrough a conduit/pipe (preferably associated with the turbocharger/intercooler) such that the height of the air filter unit can be increased compared to a conventional air filter unit that must be located above the intercooler conduit, within the same engine bay space.

The most preferred embodiment of the invention involves integrating a conduit means through the housing, each end of which can be connected to a turbocharger and to an intercooler respectively. However, alternative ways of accommodating a conduit may be possible such as forming a hole in opposing side walls of the housing and passing a conduit therethrough with suitable sealing to prevent leakage of air passing through the filter, or providing a passageway through which a conduit can be passed.

An air filter unit according to the invention can result in reducing the overall number of parts, and simplifying assembly of the engine and its accessories, while improving performance of the engine.

An air filter unit according to the present invention will be described hereinafter with reference to the accompanying drawings, in which:-
Figures 1 to 3 illustrate various views of an existing, i.e. prior art, compact vehicle engine and its components for general reference;
Figure 4 illustrates a sectional view of an air filter unit according to the invention fitted to an engine;
Figures 5a to 5c illustrate schematic views of the air filter unit according to the invention; and
Figure 6 illustrates a general side view of an embodiment of the air filter unit casing according to the invention.

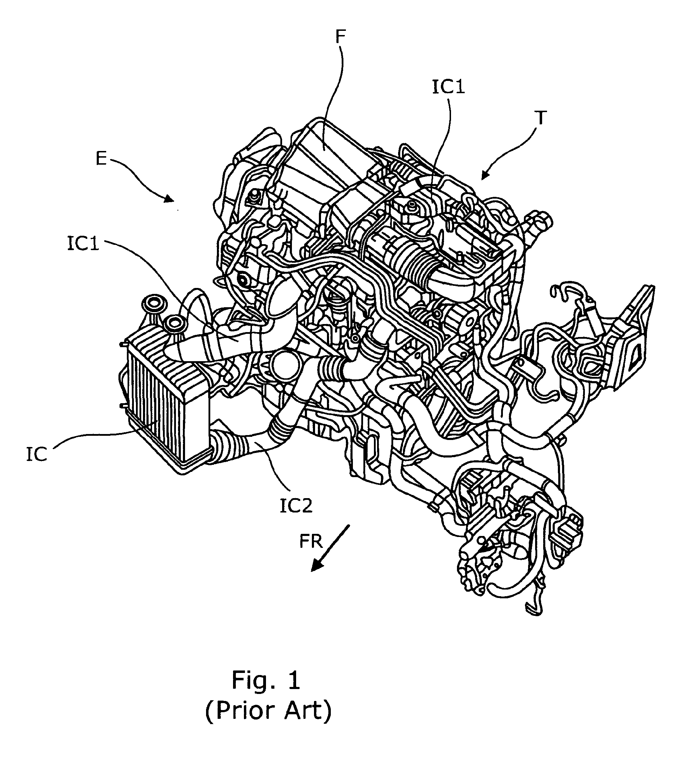

Figure 1 shows an existing compact vehicle engine E that includes an intercooler IC located at a frontal position of the engine, an air filter unit F located atop the engine and a turbocharger T located behind the engine (not fully visible in the illustration). The air filter unit is intended to remove particulates from fresh air before it is directed into the turbocharger.

A first intercooler duct IC1, leading underneath air filter unit F, delivers hot air from the turbocharger T into intercooler IC; while a second intercooler duct IC2 delivers dense air from the intercooler into the engine E.

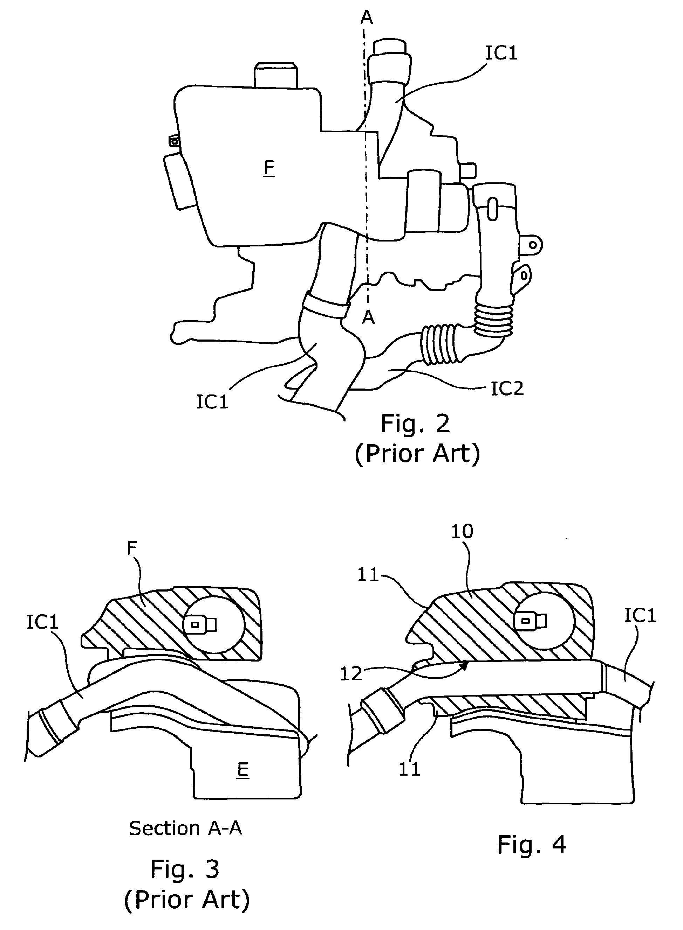

Figures 2 and 3 show plan and section (along line A-A) views respectively of a part of the engine E, adjacent air filter unit F and intercooler duct IC1. In Figure 3 it is shown clearly that, in an existing engine E, the air filter unit F is secured (by suitable means, e.g. clips) on the topside of the engine, above duct IC1.

By contrast, Figure 4 illustrates an engine E arrangement incorporating an air filter unit 10 according to the invention; wherein a housing 11 of the air filter unit includes a passage 12 into which intercooler duct IC1 has been integrated. It will be apparent that housing 11 encloses duct IC1 above and below and hence, overall, has a larger cross sectional area (depth) than the air filter F of Figure 3.

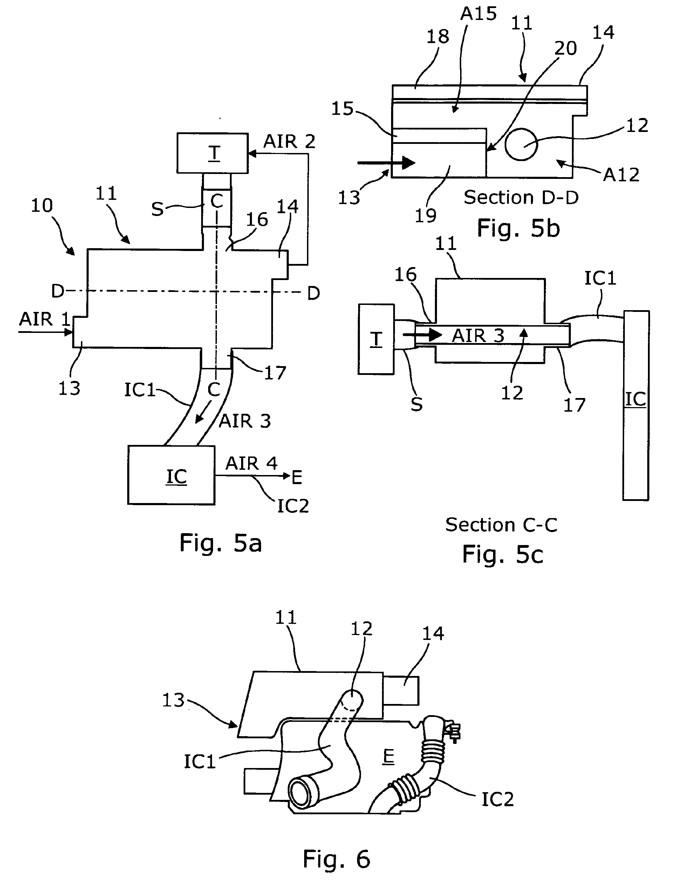

Figures 5a to 5c schematically illustrate an air filter 10 according to the invention as outlined by Figure 4. Figure 5a shows a plan view of the air filter unit 10 where the air inlet 13 and air outlet 14 are generally visible, defining a flow of air (AIR1) to be directed through a filtering means 15 as shown in Figure 5b. Clean air (AIR2) that exits the outlet 14 is routed by a suitable duct to a turbocharger T. After compression by turbocharger T, air is directed back toward the air filter unit housing 11, preferably via a silencer S.

A second cross-flow path of air (AIR3) is defined leading from the turbocharger to inlet side 16 of housing 11, through outlet side 17 of housing 11, and onward to intercooler IC via duct IC1. This second flow path (AIR3) is completely isolated from the air flow (AIR1/AIR2) between air inlet 13 and air outlet 14. Exit air (AIR4) from the intercooler IC is routed into the engine E to assist combustion and powering the vehicle.

Notably, the embodiment of Figure 5a features a duct 12 (best seen in Figure 5c) between inlet 16 and outlet 17, said duct 12 being integrated into the air filter unit 10 and coupled with silencer S from the turbocharger T and duct IC1 to the intercooler. In alternative forms, the cross-flow path may be a tunnel or channel accommodating a duct IC1 of the type illustrated by the prior art Figures 1 to 3.

The advantage of the additional height gained by routing duct IC1 through the air filter housing 11 is best illustrated by Figure 5b, where a main filter chamber 18 accommodating the filtering means 15 can be located alongside duct IC1; rather than above it, as in the prior art. Solid walls 19 and 20 at the inlet side of main filter chamber 18 ensure that air must pass through air filtering means 15 into area A15 before it can proceed to the outlet side 14 and particularly, to the part A12 of housing 11 that accommodates passage 12. As illustrated in Figure 5b, air flow can freely pass around duct 12 before exiting housing 11 via air outlet 14.

The preferred form of air filtering means 15 for use with the invention is a cartridge type device that can be replaced by making the housing 11 accessible by suitable means, e.g. an opening lid.

Figure 6 illustrates a side view of an air filter unit according to the invention, namely a "tunnel" where the duct IC1 to the intercooler is routed through passage 12 which passes through the air filter unit housing 11.

According to the preferred embodiment, the passage 12 that provides the through-pass function of the invention is generally located downstream of the air filtering means 15 itself. However, dependent on the layout of the engine and space availability, other arrangements are possible; e.g. the inlet stage of the air filter housing could accommodate the conduit/duct 12/IC1 and the air filtering means 15 may be located downstream thereof adjacent the outlet stage. Likewise, the air flow paths (AIR1 and AIR3) illustrated by Figure 5a may not necessarily be perfectly perpendicular, but may include any practical configuration that allows an engine duct component to be enclosed to some extent by the air filter unit.

It will be apparent that the primary advantage of the invention presently identified is its space saving nature or, more particularly, the ability to most efficiently use the available space. However, the invention can also enable the re-use of existing parts while simplifying assembly. There may also be advantages in the effect of cool air within the air filter unit contacting the duct from the turbocharger, providing a certain pre-cooling effect, before it reaches the intercooler.

It will be appreciated that the air filter unit of the present invention can be manufactured from available materials and techniques, e.g. injection moulded plastics.

## Claims

1. An air filter unit (10) for a motor vehicle, the air filter unit comprising a housing (11) for mounting on an engine (E) of the motor vehicle, said housing including an air inlet (13) and an air outlet (14), and being capable of accommodating an air filtering means (15) between the air inlet (13) and the air outlet (14), wherein the housing (11) further accommodates a through-path (12) for a conduit (IC1) associated with another component of the engine;
**characterized in that**:
the housing (11) encloses the conduit (IC1) above and below, so that air flow can freely pass around the through-path (12) before exiting the housing (11) via the air outlet (14).

2. The air filter unit (10) according to claim 1, wherein the through-path (12) is located downstream of the air filtering means (15) in the direction of flow of air passing through the air filter unit (10).

3. The air filter unit (10) according to claim 1 or claim 2, wherein in use, the conduit (IC1) associated with the through-path (12) is a pipe or duct carrying air.

4. The air filter unit (10) according to any preceding claim, wherein the conduit (IC1) carries air from a turbocharger (T) to an intercooler (IC).

5. The air filter unit (10) according to any preceding claim, wherein the through-path (12) is located to cross the housing (11) generally perpendicularly to the direction of flow of air (AIR1, AIR2) between the air inlet (13) and the air outlet (14).

6. The air filter unit (10) according to any preceding claim, wherein the part of the conduit (IC1) in the through-path (12) is double-skinned.

7. The air filter unit (10) according to any preceding claim, wherein the air filtering means (15) is a cassette type air filtering element.

8. The air filter unit (10) according to any preceding claim, wherein the conduit (IC1) is integrated with the housing (11).

9. The air filter unit (10) according to claim 8, wherein the conduit (IC1) and the housing (11) intersect at joints, said joints incorporating seals which fill any gaps between the conduit and the housing, so that the housing (11) is leak free at the joints.

10. The air filter unit (10) according to any preceding claim, wherein an air filtering side (A15) of the housing (11) is separated from a conduit accommodating side (A12) of the housing (11).

11. An air filter unit (10) for a motor vehicle engine (E) according to any preceding claim, wherein the air filter unit defines, in use, a first air flow path (AIR1, AIR2) between the air inlet (13) and the air outlet (14), and wherein the conduit (IC1) defines a second flow path (AIR3), said second flow path not being in fluid communication with the first air flow path (AIR1, AIR2).

12. A method of installing an air filter unit (10) to a motor vehicle engine (E), wherein the air filter unit (10) includes a housing (11) with an air inlet (13) and an air outlet (14), and is capable of accommodating an air filtering means (15) between the air inlet (13) and the air outlet (14), the method comprising connecting air flow lines to a conduit means (IC1) passing through the housing (11), said conduit means being sealed from communication with air passing through the air filtering means (15);
**characterized in that**:
the housing (11) encloses the conduit means (IC1) above and below, so that air flow can freely pass around the conduit means (IC1) before exiting the housing (11) via the air outlet (14).

## Patentansprüche

1. Luftfiltereinheit (10) für ein Kraftfahrzeug, wobei die Luftfiltereinheit ein Gehäuse (11) zum Anbauen an einem Motor (E) des Kraftfahrzeugs umfasst, wobei das Gehäuse einen Lufteinlass (13) und einen Luftauslass (14) umfasst und in der Lage ist, ein Luftfiltermittel (15) zwischen dem Lufteinlass (13) und dem Luftauslass (14) aufzunehmen, wobei das Gehäuse (11) ferner einen durchgehenden Pfad (12) für eine Leitung (IC1) aufnimmt, der mit einer anderen Komponente des Motors verknüpft ist;
**dadurch gekennzeichnet, dass**:
das Gehäuse (11) die Leitung (IC1) oben und unten umschließt, sodass ein Luftstrom frei um den durchgehenden Pfad (12) strömen kann, bevor er über den Luftauslass (14) aus dem Gehäuse (11) tritt.

2. Luftfiltereinheit (10) nach Anspruch 1, wobei der durchgehende Pfad (12) in Strömungsrichtung der Luft durch die Luftfiltereinheit (10) nach dem Filtermittel (15) angeordnet ist.

3. Luftfiltereinheit (10) nach Anspruch 1 oder Anspruch 2, wobei im Gebrauch die mit dem durchgehenden Pfad (12) verknüpfte Leitung (IC1) ein Rohr oder eine Luft leitende Führung ist.

4. Luftfiltereinheit (10) nach einem der vorhergehenden Ansprüche, wobei die Leitung (IC1) Luft von einem Turbolader (T) zu einem Ladeluftkühler (IC) leitet.

5. Luftfiltereinheit (10) nach einem der vorhergehenden Ansprüche, wobei die durchgehende Leitung (12) so angeordnet ist, dass sie das Gehäuse (11) im Wesentlichen senkrecht zur Strömungsrichtung der Luft (AlR1, AlR2) zwischen dem Lufteinlass (13) und dem Luftauslass (14) schneidet.

6. Luftfiltereinheit (10) nach einem der vorhergehenden Ansprüche, wobei der Teil der Leitung (IC1) im durchgehenden Pfad (12) doppelwandig ausgebildet ist.

7. Luftfiltereinheit (10) nach einem der vorhergehenden Ansprüche, wobei das Luftfiltermittel (15) ein Luftfilterelement vom Kassettentyp ist.

8. Luftfiltereinheit (10) nach einem der vorhergehenden Ansprüche, wobei die Leitung (IC1) im Gehäuse (11) integriert ist.

9. Luftfiltereinheit (10) nach Anspruch 8, wobei die Leitung (IC1) und das Gehäuse (11) sich in Gelenken überschneiden, wobei die Gelenke Dichtungen enthalten, die jegliche Spalten zwischen der Leitung und dem Gehäuse verfüllen, sodass das Gehäuse (11) an den Gelenken keine Undichtigkeiten aufweist.

10. Luftfiltereinheit (10) nach einem der vorhergehenden Ansprüche, wobei eine Luft filternde Seite (A15) des Gehäuses (11) von einer eine Leitung aufnehmenden Seite (A12) des Gehäuses (11) getrennt ist.

11. Luftfiltereinheit (10) für einen Kraftfahrzeugmotor (E) nach einem der vorhergehenden Ansprüche, wobei die Luftfiltereinheit im Gebrauch einen ersten Luftströmungspfad (AlR1, AlR2) zwischen dem Lufteinlass (13) und dem Luftauslass (14) definiert, und wobei die Leitung (IC1) einen zweiten Strömungspfad (AlR3) definiert, wobei der zweite Strömungspfad nicht mit dem ersten Luftströmungspfad (AlR1, AlR2) in Fluidverbindung steht.

12. Verfahren zum Einbauen einer Luftfiltereinheit (10) in einen Kraftfahrzeugmotor (E), wobei die Luftfiltereinheit (10) ein Gehäuse (11) mit einem Lufteinlass (13) und einem Luftauslass (14) umfasst und ein Luftfiltermittel (15) zwischen dem Lufteinlass (13) und dem Luftauslass (14) aufnehmen kann, wobei das Verfahren das Verbinden von Luftströmungsleitungen zu einem Leitungsmittel (IC1) umfasst, das durch das Gehäuse (11) verläuft, wobei das Leitungsmittel gegen Kommunikation mit Luft, die durch das Luftfiltermittel (15) strömt, abgedichtet ist;
**dadurch gekennzeichnet, dass**:
das Gehäuse (11) die Leitung (IC1) oben und unten umschließt, sodass ein Luftstrom um das Leitungsmittel (IC1) strömen kann, bevor er über den Luftauslass (14) aus dem Gehäuse (11) tritt.

## Revendications

1. Unité de filtre à air (10) pour un véhicule motorisé, l'unité de filtre à air comprenant un logement (11) à monter sur un moteur (E) du véhicule motorisé, ledit logement incluant une admission d'air (13) et un refoulement d'air (14), et étant capable d'accueillir un moyen de filtration d'air (15) entre l'admission d'air (13) et le refoulement d'air (14), dans laquelle le logement (11) accueille en outre un passage traversant (12) pour une conduite (IC1) associée à un autre composant du moteur ;
**caractérisée en ce que** :
le logement (11) ceint la conduite (IC1) au-dessus et en dessous, de sorte qu'un écoulement d'air peut passer librement autour du passage traversant (12) avant de sortir du logement (11) via le refoulement d'air (14).

2. Unité de filtre à air (10) selon la revendication 1, dans laquelle le passage traversant (12) est situé en aval du moyen de filtration d'air (15) dans la direction d'écoulement d'air traversant l'unité de filtre à air (10).

3. Unité de filtre à air (10) selon la revendication 1 ou la revendication 2, dans laquelle en utilisation, la conduite (IC1) associée au passage traversant (12) est un tuyau ou un conduit transportant de l'air.

4. Unité de filtre à air (10) selon l'une quelconque des revendications précédentes, dans laquelle la conduite (IC1) transporte l'air d'un turbocompresseur (T) à un refroidisseur intermédiaire (IC).

5. Unité de filtre à air (10) selon l'une quelconque des revendications précédentes, dans laquelle le passage traversant (12) est situé pour traverser le logement (11) généralement perpendiculairement à la direction d'écoulement d'air (AlR1, AlR2) entre l'admission d'air (13) et le refoulement d'air (14).

6. Unité de filtre à air (10) selon l'une quelconque des revendications précédentes, dans laquelle la partie de la conduite (IC1) dans le passage traversant (12) est à double paroi.

7. Unité de filtre à air (10) selon l'une quelconque des revendications précédentes, dans laquelle le moyen de filtration d'air (15) est un élément de filtration d'air de type cassette.

8. Unité de filtre à air (10) selon l'une quelconque des revendications précédentes, dans laquelle la conduite (IC1) est intégrée au logement (11).

9. Unité de filtre à air (10) selon la revendication 8, dans laquelle la conduite (IC1) et le logement (11) se croisent au niveau de joints, lesdits joints incorporant des dispositifs d'étanchéité qui remplissent tout espace entre la conduite et le logement, de sorte que le logement (11) soit exempt de fuite au niveau des joints.

10. Unité de filtre à air (10) selon l'une quelconque des revendications précédentes, dans laquelle un côté de filtration d'air (A15) du logement (11l) est séparé d'un côté d'accueil de conduite (A12) du logement (11).

11. Unité de filtre à air (10) pour un moteur de véhicule motorisé (E) selon l'une quelconque des revendications précédentes, dans laquelle l'unité de filtre à air définit, en utilisation, un premier passage d'écoulement (AlR1, AlR2) entre l'admission d'air (13) et le refoulement d'air (14), et dans laquelle la conduite (IC1) définit un second passage d'écoulement (AlR3), ledit second passage d'écoulement n'étant pas en communication fluidique avec le premier passage d'écoulement d'air (AlR1, AlR2).

12. Procédé d'installation d'une unité de filtre à air (10) sur un moteur de véhicule motorisé (E), dans lequel l'unité de filtre à air (10) inclut un logement (11) doté d'une admission d'air (13) et d'un refoulement d'air (14), et est capable d'accueillir un moyen de filtration d'air (15) entre l'admission d'air (13) et le refoulement d'air (14), le procédé comprenant le raccordement de canalisations d'écoulement d'air à un moyen de conduite (IC1) traversant le logement (11), ledit moyen de conduite étant étanchéifié pour empêcher une communication avec l'air traversant le moyen de filtration d'air (15) ;
**caractérisé en ce que** :
le logement (11) ceint le moyen de conduite (IC1) au-dessus et en dessous, de sorte qu'un écoulement d'air peut passer librement autour du moyen de conduite (IC1) avant de sortir du logement (11) via le refoulement d'air (14).
